# EUROPÄISCHE PATENTSCHRIFT

(11) **EP 3 240 965 B1**
(45) Veröffentlichungstag und Bekanntmachung des Hinweises auf die Patenterteilung: **26.09.2018**
(21) Anmeldenummer: 16805341.1
(22) Anmeldetag: 24.11.2016
(51) Int. Cl.: F16K 1/04

(54) **ECKVENTIL**
ANGLE VALVE
ROBINET ÉQUERRE

(30) Priorität: 26.11.2015 DE 102015120552
(43) Veröffentlichungstag der Anmeldung: 08.11.2017
(73) Patentinhaber: Schell GmbH & Co. KG, 57462 Olpe (DE)
(72) Erfinder: WEBER, Hanno, 57581 Katzwinkel (DE)
(74) Vertreter: Patentanwälte Dörner & Kötter PartG mbB
(86) Internationale Anmeldenummer: PCT/EP2016/078615
(87) Internationale Veröffentlichungsnummer: WO 2017/089434

(56) Entgegenhaltungen:
- AU-B2- 491 845
- DE-U1- 29 705 205

## Beschreibung

Die Erfindung betrifft ein Eckventil zum Anschluss sanitärer Armaturen mit einem Gehäuse, umfassend einen Eintrittsstutzen und einen Austrittsstutzen, zwischen denen ein Ventilsitz ausgebildet ist, der mit der Dichtfläche einer Ventilspindel korrespondiert, wobei die Ventilspindel aus Kunststoff hergestellt ist und ein Gewinde aufweist, das mit einem Gewinde im Gehäuse zusammenwirkt, sowie einem Sicherungsring zur Sicherung der Ventilspindel gegen Herausdrehen.

Der Anschluss von Wasch- oder Spültischarmaturen erfolgt üblicherweise mit Hilfe von Eckventilen (vgl. bspw. Schell Eckregulierventil "Comfort" Bestell-Nr. 049160699). Die Eckventile weisen einen Eintrittsstutzen zum Anschluss an das Wandanschlussfitting der Sanitärinstallation des Gebäudes, einen Austrittsstutzen zum Anschluss der Auslaufarmatur und ein Absperrventil auf. Ein solches Eckventil ist bspw. aus der DE 297 05 205 U1 bekannt. Die in den Eckventilen vorgesehene Ventilspindel zum Absperren bzw. Einstellen des Wasserzuflusses zu der angeschlossenen Armatur ist üblicherweise aus Messing hergestellt. Die Ventilspindeln sind mit Hilfe eines Griffs betätigbar. Zur Betätigung der Spindeln sind diese mit einem metrischen Feingewinde versehen, welches mit einem im Gehäuse des Eckventils vorgesehenen metallischen Gewinde korrespondiert. Die Ventilspindel ist gemäß DIN 3227 gegen Herausdrehen aus dem Gehäuse zu sichern. Dies erfolgt üblicherweise durch einen Runddrahtring aus Metall, der in einer Ringnut in dem Ventilgehäuse angeordnet ist. Bei vollständig geöffnetem Ventil wird das Gewinde der Ventilspindel gegen den Sicherungsring gepresst und die Spindel dadurch am Herausdrehen gehindert.
Neben den vorstehend beschriebenen Eckventilen aus Metall sind auch solche Eckventile bekannt, die unter anderem aus hygienischen Gründen vollständig oder teilweise aus Kunststoff hergestellt sind (vgl. bspw. AU 491 845 B2). Bei Eckventilen mit einer Kunststoffspindel erfordert das Langzeitverhalten der Kunststoffe eine Verstärkung im Spindelgewinde. Das bei den vorstehend beschriebenen Eckventilen aus Metall zur Anwendung kommende metrische Feingewinde weist aufgrund der abnehmenden Kunststofffestigkeit gegenüber anderen Gewindeformen keine ausreichende Scherfläche auf, um eine dauerhafte Dichtheit bei den auftretenden Drücken in den Wasserleitungen der Gebäudeinstallation sicherzustellen. Aufgrund der Gewindegeometrie, insbesondere in Bezug auf die Steigung und die Flankenhöhe, ist bei Trapezgewinden aus Kunststoff eine Ausdrehsicherung mittels Runddrahtring, wie sie bei den vorbeschriebenen Eckventilen aus Metall zum Einsatz kommt, ungeeignet. Die Punktlast am Ende des Trapezgewindes würde bei Verwendung von Runddrahtringen als Sicherung zum Fließen des Kunststoffs und damit zu Beschädigung des Gewindes führen. Die Funktion des Eckventils aus Kunststoff wäre folglich nicht mehr sichergestellt.

Hier will die Erfindung Abhilfe schaffen. Der Erfindung liegt die Aufgabe zu Grunde, ein Eckventil zu schaffen, bei dem eine Ausdrehsicherung für eine Kunststoffspindel geschaffen ist, die auch bei hohen Systemdrücken die Funktionssicherheit des Eckventils gewährleistet. Gemäß der Erfindung wird diese Aufgabe dadurch gelöst, dass der Sicherungsring einen Innenkonus aufweist, der mit einem Konus der Ventilspindel korrespondiert.

Mit der Erfindung ist ein Eckventil geschaffen, bei dem eine zuverlässige Funktion auch bei hohem Systemdrücken innerhalb der Gebäudeinstallationsleitungen gewährleistet ist und gleichzeitig eine zuverlässige Sicherung gegen Ausdrehen der Spindel aus Kunststoff bereitstellt. Dies ist dadurch gewährleistet, dass aufgrund der korrespondierenden Konusse des Sicherungsrings einerseits und der Ventilspindel andererseits bei zunehmendem Druck auf die Spindel die Konusse miteinander verkeilen, wodurch eine zusätzliche Klemmkraft hervorgerufen ist. Somit ist bei Erhöhung des Drucks auf die Spindel auch eine Erhöhung der Klemmkraft gegen Herausdrehen hervorgerufen.

Vorteilhaft liegt der Sicherungsring in einer Ringnut des Gehäuses ein und stützt sich mit einer Anschlagfläche gegen einen Absatz des Gehäuses ab. Durch diese Ausgestaltung ist gewährleistet, dass der Sicherungsring auch unter hohem Krafteinfluss der Spindel seine Position innerhalb des Eckventils beibehält und somit zuverlässig für die Sicherung der Spindel im Eckventil Sorge tragen kann.

Bevorzugt ist der Sicherungsring aus Kunststoff. Die Herstellung des Sicherungsrings aus Kunststoff ist zum einen unter Kostengesichtspunkten attraktiv, zum anderen stellt sich hierdurch eine sehr gute Materialkombination zwischen der aus Kunststoff bestehenden Spindel und dem Sicherungsring ein.

In Weiterbildung der Erfindung ist der Sicherungsring von einer Scheibe und einem Absatz gebildet. Hierbei handelt es sich um eine konstruktiv einfache Ausgestaltung, die einfach und damit preiswert herstellbar ist.

In anderer Ausgestaltung der Erfindung weist der Sicherungsring Ausschnitte auf, die in der Scheibe ausgebildet sind, und Ausschnitte die in dem Absatz ausgebildet sind, wobei die Ausschnitte im Wechsel zueinander auf dem Sicherungsring angeordnet sind. Hierdurch ist die Montage des Sicherungsrings vereinfacht, da beim Zusammenbau des Eckventils in einfacher Weise ein Aufschieben des Sicherungsrings und damit ein Eintritt der Ausschnitte in die Ringnut des Gehäuses einfach möglich ist.

In anderer Ausgestaltung der Erfindung weist der Sicherungsring einen Schlitz auf. Hierdurch ist der Sicherungsring geteilt, so dass auch hier die Möglichkeit besteht, in einfacher Weise den Sicherungsring im Eckventil zu montieren. Beim Aufschieben des Sicherungsrings in den Ventilstutzen drückt sich der Sicherungsring im Bereich des Spalts zusammen, so dass der Sicherungsring den Eintritt passieren kann und in die Ringnut eintreten kann, in der er sich dann wieder entspannt.

Besonders bevorzugt ist das Gewinde der Ventilspindel ein Trapezgewinde. Die Ausbildung des Gewindes als Trapezgewinde hat sich bei der Verwendung von Ventilspindeln aus Kunststoff als besonders geeignet herausgestellt, weil das Trapezgewinde eine verhältnismäßig hohe Tragfähigkeit aufweist.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:

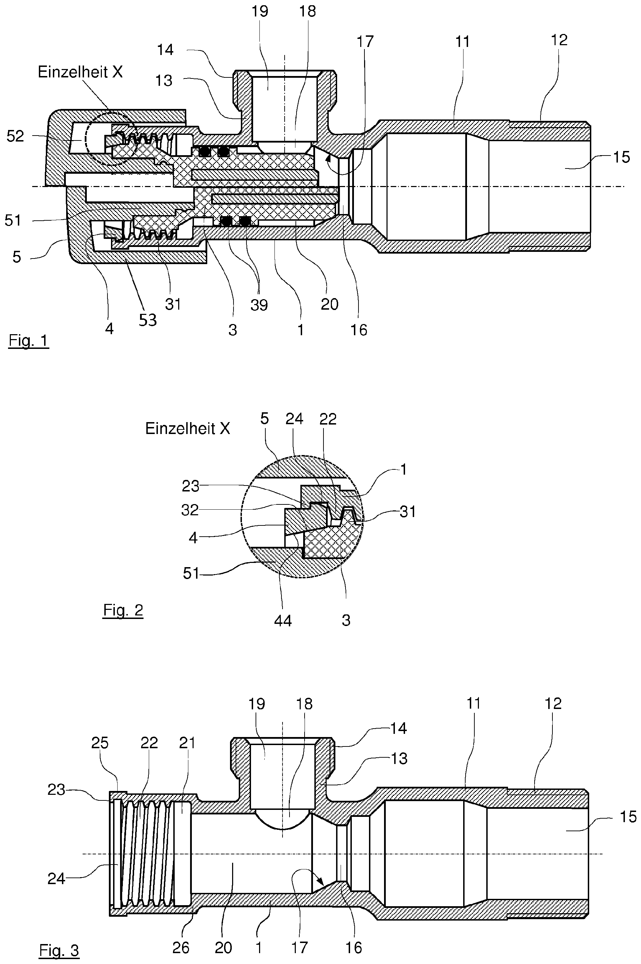

- Figur 1: den Längsschnitt durch ein Eckventil, wobei in der unteren Hälfte der geschlossene, in der oberen Hälfte der offene Zustand dargestellt ist;
- Figur 2: die Einzelheit "X" aus Figur 1 in vergrößertem Maßstab;
- Figur 3: den Längsschnitt durch das Gehäuse eines Eckventils;
- Figur 4: den Schnitt durch eine Ventilspindel;
- Figur 5: den Schnitt entlang der Linie A-A in Figur 6
- Figur 6: die Ansicht eines Sicherungsrings und
- Figur 7: den Schnitt durch einen Dichtungsring in anderer Ausbildung.

Das als Ausführungsbeispiel gewählte Eckventil hat ein Gehäuse 1. Das Gehäuse 1 ist in der Regel aus Metall hergestellt. Es kann jedoch auch aus Kunststoff hergestellt sein. Es umfasst einen Eintrittsstutzen 11 sowie einen Austrittsstutzen 13 sowie einen Ventilstutzen 26, wobei Eintrittsstutzen 11 und Ventilstutzen 26 zueinander koaxial, der Austrittsstutzen 13 dazu rechtwinklig ausgerichtet sind. In dem Gehäuse 1 ist eine Ventilspindel 3 angeordnet, die mit einem Sicherungsring 4, 104 in dem Ventilstutzen 26 gesichert ist und mittels eines Griffs 5 betätigbar ist.

Der Eintrittsstutzen 11 ist an seinem freien Ende außen mit einem Gewinde 12 versehen; innen ist eine Eintrittsbohrung 15 ausgebildet. Im Übergang zwischen dem Eintrittsstutzen 11 und dem Ventilstutzen 26 ist eine Ventilsitzbohrung 16 ausgebildet, die einen Ventilsitz 17 umfasst. An den Ventilsitz 17 schließt sich im Ventilstutzen 26 eine Spindelaufnahme 20 an. Von der Spindelaufnahme 20 geht eine Durchgangsbohrung 18 in Richtung des Austrittsstutzens 13 ab, der von einer Austrittsbohrung 19 durchsetzt ist. Außen ist der Austrittsstutzen 13 an seinem freien Ende mit einem Gewinde 14 versehen.

In dem Ventilstutzen 26 schließt sich an die Spindelaufnahme 20 eine Freidrehung 21 an. Der Ventilstutzen 26 ist mit einem Innengewinde 22 für die Ventilspindel 3 versehen, das sich an die Freidrehung 21 anschließt. Das Innengewinde 22 endet in einer Ringnut 24, die am freien Ende des Ventilstutzens 26 einen nach innen gerichteten Absatz 23 ausbildet. Außen ist der Ventilstutzen 26 ebenfalls mit einem Absatz 25 versehen.

Die Ventilspindel 3 ist rotationssymmetrisch aufgebaut. Sie ist aus Kunststoff hergestellt. Die Ventilspindel 3 weist in ihrem dem Eintrittsstutzen 11 abgewandten Bereich außen ein Gewinde 31 auf, das in montiertem Zustand mit dem Gewinde 22 des Gehäuses 1 korrespondiert. Benachbart zum Gewinde 31 ist an dem dem Eintrittsstutzen 11 abgewandten Ende ein Konus 32 ausgebildet. Innen ist in diesem Bereich der Ventilspindel 3 eine Griffaufnahme 37 vorgesehen, die abgesetzt ausgebildet ist und benachbart zu ihrem Boden eine Ringnut 38 aufweist.

Die Ventilspindel 3 ist außen in ihrem mittleren Bereich mit einem Absatz 35 versehen, in den Ringnuten 36 eingebracht sind. In montiertem Zustand ist die Ventilspindel 3 durch in den Ringnuten 36 angeordnete Dichtungsringe 39 gegen die Spindelaufnahme 20 abgedichtet. An ihrem dem Eintrittsstutzen 11 zugewandten Ende ist eine Dichtfläche 34 ausgebildet, die in montiertem Zustand mit dem Ventilsitz 17 korrespondiert. Im Ausführungsbeispiel ist die Ventilspindel 3 mit einem Einsatz 33 versehen, der in eine ringförmige Ausnehmung eingesetzt ist. Der Einsatz 33 kann aus einem von der Ventilspindel 3 verschiedenen Material hergestellt sein. Der Einsatz 33 ist zur Verbesserung der fertigungstechnischen Bedingungen für die Herstellung der Ventilspindel 3 vorgesehen. Gleichzeitig lässt sich insbesondere durch Wahl eines stabilen Materials für den Einsatz 33 die Stabilität der Ventilspindel 3 insgesamt erhöhen. In Abwandlung des Ausführungsbeispiels besteht auch die Möglichkeit, auf die Ventilspindel 3 einen Stopfen aufzuspritzen.

Am freien Ende des Ventilstutzens 26 ist der Sicherungsring 4, 104 für die Ventilspindel 3 angeordnet. Der Sicherungsring 4, 104 ist aus Kunststoff hergestellt und weist in seinem Zentrum eine Durchtrittsbohrung 49, 149 für die Ventilspindel 3 auf. Der Sicherungsring 4, 104 ist von einer Scheibe 41, 141 und einem sich daran anschließenden Absatz 43, 143 gebildet. Er weist einen Innenkonus 44, 144 auf. Außen ist an dem Sicherungsring 4, 104 eine Nut 45, 145 vorgesehen, die eine Anschlagfläche 46, 146 ausbildet. Auf der dem Eintrittsstutzen 11 in montiertem Zustand zugewandten Seite ist an dem Sicherungsring 4, 104 eine Phase 47, 147 vorgesehen.

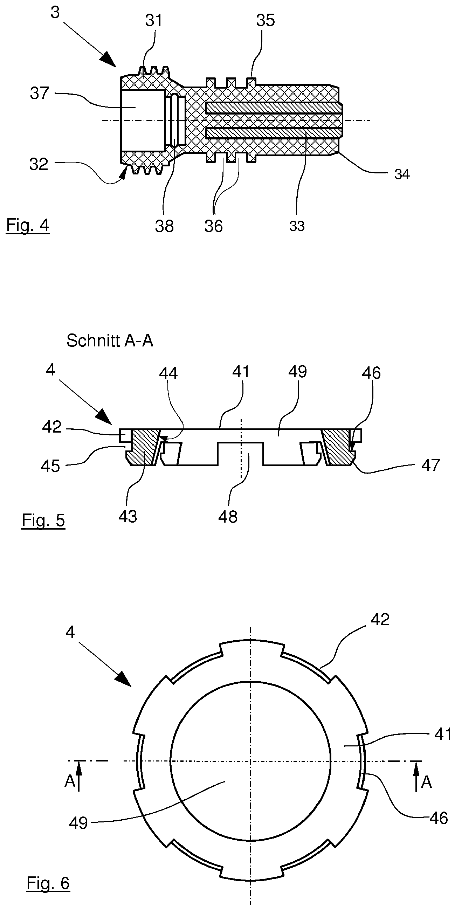

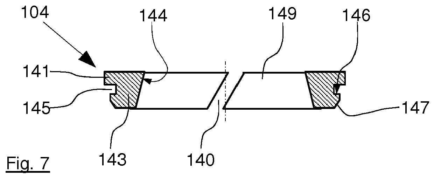

Im Ausführungsbeispiel nach den Figuren 5 und 6 ist der Sicherungsring 4 segmentiert ausgebildet, wie dies insbesondere Figur 6 zu entnehmen ist. Hierzu ist der Sicherungsring 4 auf dem Umfang der Scheibe 41 mit Ausschnitten 42 versehen. Gleichzeitig ist der Absatz 43 mit Ausschnitten 48 versehen. Die Ausschnitte 42 und 48 sind an den Sicherungsring 4 im Wechsel zueinander angeordnet. Der in Figur 7 dargestellte Sicherungsring 104 weist einen Schlitz 140 auf.

Der Griff 5 ist in an sich bekannter Weise ausgebildet. Er weist einen Absatz 51 zur Aufnahme der Ventilspindel 3 auf. Der Absatz 51 ist umgeben von einer Mantelfläche 53, wodurch zwischen Absatz 51 und Mantelfläche 53 eine ringförmige Aufnahmeöffnung 52 für das Gehäuse 1 ausgebildet ist. Der Griff 5 ist mit der Spindel 3 verrastet, indem ein umlaufender und im Querschnitt halbringförmiger Vorsprung in die Ringnut 38 der Spindel 3 eingreift.

Das erfindungsgemäße Eckventil ermöglicht eine Ausdrehsicherung für eine Spindel aus Kunststoff ohne Beeinträchtigung der Funktion des Ventils. Aufgrund der Korrespondenz der Innenkonusse 44, 144 des Sicherungsrings 4, 104 mit dem Konus 32 der Spindel 3 ist eine Lösung geschaffen, die bei erhöhtem Druck auf die Spindel beim Ausdrehen bzw. bei erhöhten Wasserdrücken eine zusätzliche Klemmwirkung hervorruft, so dass die Wirkung des Sicherungsrings 4, 104 zusätzlich erhöht wird. Ein Versagen des Sicherungsrings ist somit vermieden. Durch die Variierung der Winkel des Innenkonus 44, 144 einerseits und des Konus 32 andererseits kann eine Beeinflussung der Klemmwirkungen hervorgerufen werden. Insbesondere bei der Verwendung des Sicherungsrings 4, 104 aus Kunststoff in Kombination mit einer Spindel 3 aus Kunststoff sind die vorbeschriebenen Wirkungen des Sicherungsrings wegen der besonders geeigneten Materialkombination verbessert.

## Patentansprüche

1. Eckventil zum Anschluss sanitärer Armaturen mit einem Gehäuse (1), umfassend einen Eintrittsstutzen (11) und einen Austrittsstutzen (13), zwischen denen ein Ventilsitz (17) ausgebildet ist, der mit der Dichtfläche (34) einer Ventilspindel (3) des Eckventils korrespondiert, wobei die Ventilspindel (3) aus Kunststoff hergestellt ist und ein Gewinde (31) aufweist, das mit einem Gewinde (22) im Gehäuse (1) zusammenwirkt, sowie einem Sicherungsring (4) zur Sicherung der Ventilspindel (3) gegen Herausdrehen, **dadurch gekennzeichnet, dass** der Sicherungsring (4, 104) einen Innenkonus (44, 144) aufweist, der mit einem Konus (32) der Ventilspindel (3) korrespondiert.

2. Eckventil nach Anspruch 1, **dadurch gekennzeichnet, dass** der Sicherungsring (4, 104) in einer Ringnut (24) des Gehäuses (1) einliegt und sich mit einer Anschlagfläche (46, 146) gegen einen Absatz (23) des Gehäuses (1) abstützt.

3. Eckventil nach Anspruch 1 oder 2, **dadurch gekennzeichnet, dass** der Winkel des Innenkonus (44, 144) des Sicherungsrings (4, 104) gleich dem Winkel des Konus (32) der Ventilspindel (3) ist.

4. Eckventil nach Anspruch 1 oder 2, **dadurch gekennzeichnet, dass** der Winkel des Innenkonus (44, 144) des Sicherungsrings (4, 104) ungleich dem Winkel des Konus (32) der Ventilspindel (3) ist.

5. Eckventil nach einem der vorgenannten Ansprüche, **dadurch gekennzeichnet, dass** der Sicherungsring (4, 104) aus Kunststoff ist.

6. Eckventil nach einem der vorgenannten Ansprüche, **dadurch gekennzeichnet, dass** der Sicherungsring (4, 104) von einer Scheibe (41, 141) und einem Absatz (43, 143) gebildet ist.

7. Eckventil nach Anspruch 6, **dadurch gekennzeichnet, dass** der Sicherungsring (4) Ausschnitte (42) aufweist, die in der Scheibe (41) ausgebildet sind, und Ausschnitte (48) aufweist, die in dem Absatz (43) ausgebildet sind, wobei die Ausschnitte (42, 48) im Wechsel zueinander auf dem Sicherungsring (4) angeordnet sind.

8. Eckventil nach einem der vorgenannten Ansprüche, **dadurch gekennzeichnet, dass** der Sicherungsring (104) einen Schlitz (14) aufweist.

9. Eckventil nach einem der vorgenannten Ansprüche, **dadurch gekennzeichnet, dass** das Gewinde (31) der Ventilspindel (3) ein Trapezgewinde ist.

10. Eckventil nach einem der vorgenannten Ansprüche, **dadurch gekennzeichnet, dass** das Gehäuse (1) aus Kunststoff ist.

## Claims

1. Angle valve for connecting sanitary fittings to a housing (1) comprising an inlet connection (11) and an outlet connection (13), between which a valve seat (17) is formed, which corresponds to the sealing face (34) of a valve spindle (3) of the angle valve, wherein the valve spindle (3) is made of plastic and has a thread (31), which interacts with a thread (22) in the housing (1) as well as a securing ring (4) for securing the valve spindle (3) against unscrewing, **characterised in that** the securing ring (4, 104) has an inner cone (44, 144), which corresponds to a cone (32) of the valve spindle (3).

2. Angle valve according to claim 1, **characterised in that** the securing ring (4, 104) is located in an annular groove (24) of the housing (1) and rests against a shoulder (23) of the housing (1) with a stop surface (46, 146).

3. Angle valve according to claim 1 or 2, **characterised in that** the angle of the inner cone (44, 144) of the securing ring (4, 104) is equal to the angle of the cone (32) of the valve spindle (3).

4. Angle valve according to claim 1 or 2, **characterised in that** the angle of the inner cone (44, 144) of the securing ring (4, 104) is not equal to the angle of the cone (32) of the valve spindle (3).

5. Angle valve according to one of the previous claims, **characterised in that** the securing ring (4, 104) is made of plastic.

6. Angle valve according to one of the previous claims, **characterised in that** the securing ring (4, 104) is formed by a disc (41, 141) and a shoulder (43, 143).

7. Angle valve according to claim 6, **characterised in that** the securing ring (4) has openings (42) which are formed in the disc (41) and has openings (48) which are formed in the shoulder (43), wherein the openings (42, 48) are arranged on the securing ring in alternation to one another.

8. Angle valve according to one of the previous claims, **characterised in that** the securing ring (104) has a slot (14).

9. Angle valve according to one of the previous claims, **characterised in that** the thread (31) of the valve spindle (3) is a trapezoidal thread.

10. Angle valve according to one of the previous claims, **characterised in that** the housing (1) is made of plastic.

## Revendications

1. Robinet équerre servant à raccorder des robinetteries sanitaires, avec un corps (1), comprenant un embout d'entrée (11) et un embout de sortie (13) entre lesquels est configuré un siège (17) de robinet, siège qui épouse la surface d'étanchéité (34) d'une broche (3) du robinet équerre, sachant que la broche (3) du robinet est fabriquée en matière plastique et présente un filetage (31) qui interagit avec un filetage (22) dans le corps (1) ainsi qu'avec un circlip (4) pour sécuriser la broche (3) du robinet contre le dévissage, **caractérisé en ce que** le circlip (4, 104) présente un cône intérieur (44, 144) qui épouse un cône (32) de la broche (3) du robinet.

2. Robinet équerre selon la revendication 1, **caractérisé en ce que** le circlip (4, 104) est logé dans une gorge annulaire (24) du corps (1) et qu'il prend appui par une surface butée (46, 146) contre un talon (23) du corps (1).

3. Robinet équerre selon la revendication 1 ou 2, **caractérisé en ce que** l'angle du cône intérieur (44, 144) du circlip (4, 104) est égal à l'angle du cône (32) de la broche (3) du robinet.

4. Robinet équerre selon la revendication 1 ou 2, **caractérisé en ce que** l'angle du cône intérieur (44, 144) du circlip (4, 104) n'est pas égal à l'angle du cône (32) de la broche (3) du robinet.

5. Robinet équerre selon l'une des revendications précédentes, **caractérisé en ce que** le circlip (4, 104) est en matière plastique.

6. Robinet équerre selon l'une des revendications précédentes, **caractérisé en ce que** le circlip (4, 104) est formé par une rondelle (41, 141) et un talon (43, 143).

7. Robinet équerre selon la revendication 6, **caractérisé en ce que** le circlip (4) présente des découpes (42) ménagées dans la rondelle (41), et des découpes (48) ménagées dans le talon (43), sachant que les découpes (42, 48) sont disposées en alternance mutuelle sur le circlip (4).

8. Robinet équerre selon l'une des revendications précédentes, **caractérisé en ce que** le circlip (104) présente une fente (14).

9. Robinet équerre selon l'une des revendications précédentes, **caractérisé en ce que** le filetage (31) de la broche (3) du robinet est un filetage trapézoïdal.

10. Robinet équerre selon l'une des revendications précédentes, **caractérisé en ce que** le corps (1) est en matière plastique.
